# EUROPÄISCHE PATENTANMELDUNG

(11) **EP 3 730 202 A1**
(43) Veröffentlichungstag der Anmeldung: **28.10.2020**
(21) Anmeldenummer: 19171249.6
(22) Anmeldetag: 26.04.2019
(51) Int. Cl.: B01D 53/04, C01B 7/04, B01J 20/00, B01J 21/00, B01J 23/00, C01B 7/07

(54) **VERFAHREN ZUR REINIGUNG VON SCHWEFELHALTIGEN KORROSIVEN PROZESSGASEN**

(71) Anmelder: Covestro Deutschland AG, 51373 Leverkusen (DE)
(72) Erfinder: Lueken, Alexander, 41564 Kaarst (DE); Venz, Michael, 41540 Dormagen (DE); Burbach, Thomas, 50181 Bedburg (DE); Rittermeier, Andre, 44809 Bochum (DE)
(74) Vertreter: Levpat

(57) **Zusammenfassung**

Es wird ein Verfahren zur Reinigung von Schwefelverbindungen enthaltenden korrosiven Prozessgasen beschrieben, bei dem ein Gasstrom, welcher korrosive Gase beinhaltet, in einer Sorptionsphase über ein anorganisches Sorptionsmaterial geleitet wird, welches mindestens eine der sorbierbaren schwefelhaltigen Komponenten auf dem Sorptionsmaterial aufnimmt, und den von Schwefelverbindungen abgereicherten Gasstrom abführt.

## Beschreibung

Die Erfindung betrifft ein Verfahren zur Reinigung von schwefelhaltigen korrosiven Prozessgasen.

Die Erfindung betrifft ferner die Verwendung von Zirkonoxid und/oder Ceroxid enthaltenden anorganischen Sorptionsmitteln für die Entfernung von Schwefelverbindungen aus schwefelhaltigen korrosiven Prozessgasen.

Die Erfindung geht aus von an sich bekannten Reinigungsverfahren für korrosive und insbesondere Chlorwasserstoff enthaltende Prozessgase.
aus der WO2015198567 ist ein Mittel zur Entfernung von Schwefel aus Flüssigkeiten in einer Reinigungskolonne bekannt, dass als reaktive Komponenten Kupfer, Silber oder Eisen insbesondere Kupferpartikel enthält. Die Reinigung von korrosiven Gasen wird in dieser Schrift nicht erwähnt.

Aus der WO2015085880 ist ein Verfahren zur Entfernung von SOₓ aus Gasen bekannt geworden bei dem eine Polyethylenglykol-Lösung als Adsorptionsmittel eingesetzt wird. Dieses Adsorptionsmittel kann durch Entgasung regeneriert werden.

Aus der DE1645817 ist ein Verfahren zur Entschwefelung von Erdöl-Rohöl bekannt geworden, bei dem das Rohöl mit Wasser und Wasserstoff vermischt und das resultierende Gemisch im Kontakt mit einer Katalysatormasse bei Entschwefelungsbedingungen umsetzt. Als Katalysatormasse dient hier ein geträgerter Katalysator mit einer katalytischen Komponente aus wenigstens einem der Metalle der Gruppe VIa und VIII des Periodensystems auf einem Tonerde-Kieselsäure-Träger. Die Katalyse erfolgt in Gegenwart von Wasserstoff Die Entschwefelung von korrosiven Rohgasen wird hier nicht erwähnt.

Die Aufgabe der vorliegenden Erfindung besteht darin ein Reinigungsverfahren für Schwefelverbindungen enthaltende korrosive Prozessgase bereitzustellen, die die vorstehenden Nachteile überwindet und eine weitest gehende Entfernung von Schwefelverbindungen aus den Prozessgasen ermöglicht.

Spezielle Aufgabe der Erfindung ist es ein Gasreinigungsverfahren bereitzustellen, dass die Nachteile der bekannten Reinigungsverfahren vermeidet und insbesondere eine Reinigung von Prozessgasen für die katalytische Gasphasenoxidation von Chlorwasserstoff ermöglicht so dass eine Vergiftung des Katalysators für die Gasphasenoxidation vermieden wird.

Die Aufgabe wird dadurch gelöst, dass der korrosive Prozessgasstrom über ein chemisch inertes anorganisches Sorptionsmittel geleitet wird das die sorbierbaren schwefelhaltigen Komponenten aufnimmt.

Gegenstand der Erfindung ist ein Verfahren zur Reinigung von Schwefelverbindungen enthaltenden korrosiven Prozessgasen, dadurch gekennzeichnet, dass ein Gasstrom, welcher korrosive Gase beinhaltet, in einer Sorptionsphase bei einer definierten Temperatur über ein Sorptionsmaterial geleitet wird, welches mindestens eine der sorbierbaren schwefelhaltigen Komponenten auf dem Sorptionsmaterial aufnimmt, und den von Schwefelverbindungen abgereicherten Gasstrom abführt.

Die Aufnahme der sorbierbaren schwefelhaltigen Komponenten kann grundsätzlich durch einen Adsorptions- oder ein Absorptionsprozess erfolgen.

Bevorzugt sind bei dem neuen Verfahren als Schwefelverbindungen eine oder mehrere Verbindungen aus der Reihe: SOₓ, bevorzugt SO₂ und SO₃, H₂S, CS₂, SOCl₂, S₂Cl₂, SCl₂, COS und Merkaptane umfasst.

Das neue Verfahren ist insbesondere geeignet für die Reinigung von Gasgemischen, bei denen die Schwefelverbindungen als Spurengas vorliegen, insbesondere in einer Konzentration von maximal 10 ppm, bevorzugt maximal 1 ppm, besonders bevorzugt maximal 0,1 ppm.

In einer bevorzugten Ausführung des neuen Verfahrens weist das Sorptionsmaterial als aktive Komponente mindestens ein Oxid oder Mischoxid von Cer und/oder Zirkonium und/oder Titan auf, besonders bevorzugt CeO₂ und/oder ZrO₂ und/oder TiO₂.

Als Trägermaterial für das Sorptionsmittel eignen sich insbesondere alle grundsätzlich bekannten chemisch gegenüber Chlorwasserstoff beständigen Trägermaterialien, insbesondere einem oder mehreren Trägermaterialien aus der Reihe: Al₂O₃, TiO₂, ZnO₂, SiO₂, SnO₂ und ZrO₂, wobei das Trägermaterial und die eventuelle aktive Komponente des Sorptionsmaterials unterschiedlich sind.

Als Material für den Träger kommen besonders bevorzugt Al₂O₃, TiO₂, ZrO₂ in Frage.

In einer bevorzugten Ausführung des neuen Reinigungsverfahrens umfasst das Sorptionsmittel einen geträgerten Cer-Oxid Katalysator, der insbesondere dadurch erhalten ist, dass eine Cerverbindung insbesondere eine Verbindung aus der Reihe: Cernitrat, Ceracetat oder Cerchlorid in Lösung mittels trockener Imprägnierung auf den Träger aufgebracht und der imprägnierte Träger anschließend getrocknet und bei erhöhter Temperatur kalziniert ist.

Unter trockener Imprägnierung wird hier insbesondere verstanden, dass die aufzubringende Komponente nur in so viel Lösungsmittel gelöst wird, dass dieses Lösungsmittel vom Trägermaterial komplett aufgenommen wird.

Es wird hierbei ein trockenes saugfähiges Trägermaterial mit einer Flüssigkeit imprägniert, und es wird dennoch ein trockenes Material erhalten, da das Aufsaugvermögen des Trägers grösser als die eingesetzte Flüssigkeitsmenge ist.

Das neue Verfahren wird bevorzugt so durchgeführt, dass die Reinigung des korrosiven Prozessgases bei einer Temperatur von maximal 420°C, bevorzugt maximal 200°C, besonders bevorzugt maximal 40 °C erfolgt.

Bevorzugt erfolgt die Reinigung des korrosiven Prozessgases bei erhöhtem Druck insbesondere von mindestens 1013 hPa, bevorzugt mindestens 2026 hPa bis 25.325 hPa.

Das Reinigungsverfahren wird bevorzugt so gesteuert, dass der von Schwefelverbindungen abgereicherte Gasstrom einen Restgehalt an Schwefelverbindungen von maximal 0,05 ppm, bevorzugt maximal 0,01 ppm, besonders bevorzugt maximal 1 ppb aufweist.

In einer bevorzugten Ausführung des neuen Verfahrens weist das korrosive Prozessgas als korrosive Komponente mindestens Chlorwasserstoff oder Chlorwasserstoff und Chlor, auf. Desweiteren können inerte Komponenten im korrosiven Prozessgas, z.B. Stickstoff und Kohlenstoffdioxid enthalten sein.

Das neue Reinigungsverfahren wird in einer bevorzugten Ausführung mit einem nachgeschalteten katalysierten Verfahren insbesondere zur Umsetzung der korrosiven Gase gekoppelt. Besonders bevorzugt wird dabei der von Schwefelverbindungen abgereicherte Gasstrom einem nachgeschalteten katalytischen Prozess, bevorzugt einer katalytischen Oxidationsreaktion, besonders bevorzugt einer thermokatalytischen Oxidation von Chlorwasserstoffgas zugeführt.

Die bevorzugte zuvor beschriebene gekoppelte Fahrweise wird in einer bevorzugten Variante des neuen Verfahrens so durchgeführt, dass die Gasreinigung des korrosiven Prozessgases in einer Reaktionszone durchgeführt wird, die in einem Reaktor angeordnet ist, der von einem nachgeschalteten weiteren Reaktor getrennt ist und dessen Temperatur und/oder Druck unabhängig vom weiteren Reaktor gesteuert werden kann.

In einer bevorzugten Variante wird die Gasreinigung des korrosiven Prozessgases in einer Reaktionszone durchgeführt, die in einem Reaktor mit mehreren Reaktionszonen angeordnet ist, wobei die Reaktionszone zur Reinigung von mindestens einer weiteren nachgeschalteten Reaktionszone für die Gasphasenreaktion getrennt ist und die Temperatur und/oder der Druck in der Reaktionszone zur Gasreinigung von der nachgeschalteten Reaktionszone unabhängig gesteuert werden kann.

Bevorzugt wird wie oben bereits beschrieben das als Deacon-Prozess bekannte katalytische Verfahren eingesetzt. Hierbei wird Chlorwasserstoff mit Sauerstoff in einer exothermen Gleichgewichtsreaktion zu Chlor oxidiert, wobei Wasserdampf anfällt. Die Reaktionstemperatur beträgt üblicherweise 150 bis 500°C, der übliche Reaktionsdruck beträgt 1 bis 25 bar. Da es sich um eine Gleichgewichtsreaktion handelt, ist es zweckmäßig, bei möglichst niedrigen Temperaturen zu arbeiten, bei denen der Katalysator noch eine ausreichende Aktivität aufweist. Ferner ist es zweckmäßig, Sauerstoff in überstöchiometrischen Mengen zum Chlorwasserstoff einzusetzen. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohem Druck und dementsprechend bei gegenüber Normaldruck längerer Verweilzeit zu arbeiten.

Geeignete bevorzugte Katalysatoren für das Deacon-Verfahren enthalten Rutheniumoxid, Rutheniumchlorid, Rutheniumoxidchlorid oder andere Rutheniumverbindungen auf Siliziumdioxid, Aluminiumoxid, Titandioxid, Zinndioxid oder Zirkondioxid als Träger. Geeignete Katalysatoren können beispielsweise durch Aufbringen von Rutheniumchlorid auf den Träger und anschließendes Trocknen oder Trocknen und Calcinieren erhalten werden. Geeignete Katalysatoren können ergänzend zu oder an Stelle einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Die katalytische Chlorwasserstoff-Oxidation kann entweder adiabatisch oder isotherm oder annähernd isotherm, bevorzugt aber adiabatisch, diskontinuierlich oder kontinuierlich, bevorzugt aber kontinuierlich als Fließ- oder Festbettverfahren, bevorzugt als Festbettverfahren, besonders bevorzugt in Rohrbündelreaktoren an Heterogenkatalysatoren bei einer Reaktortemperatur von 180 bis 500°C, bevorzugt 200 bis 400°C, besonders bevorzugt 220 bis 350°C und einem Druck von 1 bis 25 bar (1000 bis 25000 hPa), bevorzugt 1,2 bis 20 bar, besonders bevorzugt 1,5 bis 17 bar und insbesondere 2,0 bis 15 bar durchgeführt werden.

Übliche Reaktionsapparate, in denen die katalytische Chlorwasserstoff-Oxidation durchgeführt wird, sind Festbett- oder Wirbelbettreaktoren. Die katalytische Chlorwasserstoff- Oxidation kann bevorzugt auch mehrstufig durchgeführt werden.

Bei der adiabatischen Fahrweise können auch mehrere, insbesondere 2 bis 10, bevorzugt 4 bis 8, besonders bevorzugt 5 bis 7 in Reihe geschaltete Reaktoren mit Zwischenkühlung eingesetzt werden. Bei der isothermen oder annähernd isothermen Fahrweise können auch mehrere, also 2 bis 10, bevorzugt 2 bis 6, besonders bevorzugt 2 bis 5, insbesondere 2 bis 3, in Reihe geschaltete Reaktoren mit zusätzlicher Zwischenkühlung eingesetzt werden. Der Chlorwasserstoff kann entweder vollständig zusammen mit dem Sauerstoff vor dem ersten Reaktor oder über die verschiedenen Reaktoren verteilt zugegeben werden. Diese Reihenschaltung einzelner Reaktoren kann auch in einem Apparat zusammengeführt werden.

Eine weitere bevorzugte Ausführungsform einer für das Deacon-Verfahren geeigneten Vorrichtung besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zinndioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpern sollte das Inertmaterial bevorzugt ähnliche äußere Abmessungen haben.

Als Heterogenkatalysatoren eignen sich insbesondere Rutheniumverbindungen oder Kupferverbindungen auf Trägermaterialen, die auch dotiert sein können, bevorzugt sind gegebenenfalls dotierte Rutheniumkatalysatoren. Als Trägermaterialen eignen sich beispielsweise Siliziumdioxid, Graphit, Titandioxid mit Rutil- oder Anatas-Struktur, Zinndioxid, Zirkondioxid, Aluminiumoxid oder deren Gemische, bevorzugt Titandioxid, Zinndioxid, Zirkondioxid, Aluminiumoxid oder deren Gemische, besonders bevorzugt Zinndioxid, α- oder γ-Aluminiumoxid oder deren Gemische.

Die Kupfer- bzw. die Rutheniumträgerkatalysatoren können beispielsweise durch Tränkung des Trägermaterials mit wässrigen Lösungen von CuCl₂ bzw. RuCl₃ und gegebenenfalls eines Promotors zur Dotierung, bevorzugt in Form ihrer Chloride, erhalten werden. Die Formgebung des Katalysators kann nach oder bevorzugt vor der Tränkung des Trägermaterials erfolgen. Geeignete Katalysatoren können ergänzend zu einer Rutheniumverbindung auch Verbindungen anderer Edelmetalle, beispielsweise Gold, Palladium, Platin, Osmium, Iridium, Silber, Kupfer, Chrom oder Rhenium enthalten.

Zur Dotierung der Katalysatoren eignen sich als Promotoren Metalle oder Metallverbindungen der Metalle: Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Als Katalysatorformkörper eignen sich Formkörper mit beliebigen Formen, bevorzugt sind Tabletten, Ringe, Zylinder, Sterne, Wagenräder oder Kugeln, besonders bevorzugt sind Ringe, Zylinder oder Sternstränge als Form.

Die Formkörper können anschließend bei einer Temperatur von 100 bis 400°C, bevorzugt 100 bis 300°C beispielsweise unter einer Stickstoff-, Argon- oder Luftatmosphäre getrocknet und gegebenenfalls kalziniert werden. Bevorzugt werden die Formkörper zunächst bei 100 bis 150°C getrocknet und anschließend bei 200 bis 400°C kalziniert.

Der Umsatz an Chlorwasserstoff im einfachen Durchgang kann bevorzugt auf 15 bis 90 %, bevorzugt 40 bis 85%, besonders bevorzugt 50 bis 70% begrenzt werden. Nicht umgesetzter Chlorwasserstoff kann nach Abtrennung teilweise oder vollständig in die katalytische Chlorwasserstoff-Oxidation zurückgeführt werden. Das Volumenverhältnis von Chlorwasserstoff zu Sauerstoff am Reaktoreintritt beträgt bevorzugt 1:1 bis 20:1, bevorzugt 1:1 bis 8:1, besonders bevorzugt 1:1 bis 5:1.

Die Reaktionswärme der katalytischen Chlorwasserstoff-Oxidation kann in vorteilhafter Weise zur Erzeugung von Hochdruck-Wasserdampf genutzt werden. Dieser kann zum Betrieb eines Phosgenierungsreaktors und oder von Destillationskolonnen, insbesondere von Isocyanat-Destillationskolonnen genutzt werden.

Weiterer Gegenstand der Erfindung ist die Verwendung eines Sorptionsmaterials, das als aktive Komponente mindestens ein Oxid oder Mischoxid von Cer und/oder Zirkonium umfasst, bevorzugt CeO₂ und/oder ZrO₂ zur Entfernung von Schwefelverbindungen aus Schwefelverbindungen enthaltendem korrosiven Prozessgas, insbesondere von mindestens Chlorwasserstoff oder Chlorwasserstoff und Chlor, enthaltendem korrosiven Prozessgas.

### Beispiele

### Beispiel 1

Zur Herstellung eines Sorptionsmittels für Schwefelverbindungen wurde ein ZrO₂-Trägermaterial (Hersteller: Saint-Gobain NorPro, Typ: SZ 31163, Extrudate mit 3 - 4 mm Durchmesser und 4 - 6 mm Länge) in monokliner Struktur mit folgenden Spezifikationen (vor dem Mörsern) eingesetzt:
- Spezifische Oberfläche von 55 m²/g (Stickstoffadsorption, Auswertung gemäß BET)
- Bimodale Porenradienverteilung, wobei eine Porenklasse 1 (Transportporen) einen Median von 60 nm und eine Porenklasse 2 (Feinporen) einen Median von 16 nm aufweist (Quecksilberporosimetrie)
- Porenvolumen von 0,27 cm³/g (Quecksilberporosimetrie)
- Schüttdichte von 1280 kg/m³ (gemessen in einem Standzylinder mit DN100 und 350 mm Höhe)

Dieses ZrO₂-Trägermaterial (SZ 31163) wurde mit einem Mörser zerstoßen und in Siebfraktionen klassiert. 1 g der Siebfraktion 100-250 µm wurde für 2 h bei 160 °C und 10 kPa getrocknet. 50 g Cer(III)Nitrat Hexahydrat wurden in 42 g entionisiertem Wasser gelöst. 0,19 ml von der dermaßen hergestellten Cer(III)Nitrat-Lösung wurden mit einer für die Füllung des gesamten Porenvolumens hinreichender Menge an entionisiertem Wasser verdünnt in einem Rollrandbecher vorgelegt und 1 g der getrockneten Siebfraktion (100-250 µm) des ZrO₂-Katalysatorträgers hineingerührt, bis die vorgelegte Lösung vollständig aufgenommen war (Methodik der trockenen Imprägnierung). Der imprägnierte ZrO₂-Katalysatorträger wurde anschließend für 5 h bei 80 °C und 10 kPa getrocknet und danach in einem Muffelofen in Luft kalziniert. Dazu wurde die Temperatur im Muffelofen innerhalb von 5 h linear von 30 °C auf 900°C erhöht und für 5 h bei 900 °C gehalten. Danach wurde der Muffelofen innerhalb von 5 h linear von 900 °C auf 30 °C abgekühlt. Die geträgerte Menge an Cer entspricht einem Anteil von 7 Gew.-% bezogen auf den kalzinierten Katalysator, wobei die Katalysatorkomponenten als CeO₂ und ZrO₂ gerechnet werden.

### Beispiel 2:

0,5 g des in Beispiel 1 präparierten Sorptionsmittels wurden in einer Festbettschüttung in einem Quarzreaktionsrohr (Innendurchmesser 8 mm) vorgelegt und bei einer Temperatur von 20 °C mit einem Gasgemisch aus 2 L/h Chlorwasserstoff, 1 L/h Sauerstoff, 2 L/h Stickstoff und 5 ppm SO₂ für 336 h durchströmt. Anschließend wurde der Schwefel-Gehalt auf dem Sorptionsmittel per Elementaranalyse bestimmt. Das Ergebnis ist in Tabelle 1 wiedergegeben.

### Beispiel 3:

0,5 g des in Beispiel 1 präparierten Sorptionsmittels wurden in einer Festbettschüttung in einem Quarzreaktionsrohr (Innendurchmesser 8 mm) vorgelegt und bei einer Temperatur von 260 °C mit einem Gasgemisch aus 2 L/h Chlorwasserstoff, 1 L/h Sauerstoff, 2 L/h Stickstoff und 5 ppm SO₂ für 336 h durchströmt. Das Quarzreaktionsrohr wurde durch einen elektrisch beheizten Ofen beheizt. Anschließend wurde der Schwefel-Gehalt auf dem Sorptionsmittel per Elementaranalyse bestimmt. Das Ergebnis ist in Tabelle 1 wiedergegeben.

### Beispiel 4:

0,5 g des in Beispiel 1 präparierten Sorptionsmittels wurden in einer Festbettschüttung in einem Quarzreaktionsrohr (Innendurchmesser 8 mm) vorgelegt und bei einer Temperatur von 300 °C mit einem Gasgemisch aus 2 L/h Chlorwasserstoff, 1 L/h Sauerstoff, 2 L/h Stickstoff und 5 ppm SO₂ für 336 h durchströmt. Das Quarzreaktionsrohr wurde durch einen elektrisch beheizten Ofen beheizt. Anschließend wurde der S-Gehalt auf dem Sorptionsmittel per Elementaranalyse bestimmt. Das Ergebnis ist in Tabelle 1 wiedergegeben.

### Beispiel 5:

0,5 g des in Beispiel 1 präparierten Sorptionsmittels wurden in einer Festbettschüttung in einem Quarzreaktionsrohr (Innendurchmesser 8 mm) vorgelegt und bei einer Temperatur von 340 °C mit einem Gasgemisch aus 2 L/h Chlorwasserstoff, 1 L/h Sauerstoff, 2 L/h Stickstoff und 5 ppm SO₂ für 336 h durchströmt. Das Quarzreaktionsrohr wurde durch einen elektrisch beheizten Ofen beheizt. Anschließend wurde der S-Gehalt auf dem Sorptionsmittel per Elementaranalyse bestimmt. Das Ergebnis ist in Tabelle 1 wiedergegeben.

### Beispiel 6:

0,5 g des in Beispiel 1 präparierten Sorptionsmittels wurden in einer Festbettschüttung in einem Quarzreaktionsrohr (Innendurchmesser 8 mm) vorgelegt und bei einer Temperatur von 380 °C mit einem Gasgemisch aus 2 L/h Chlorwasserstoff, 1 L/h Sauerstoff, 2 L/h Stickstoff und 5 ppm SO₂ für 336 h durchströmt. Das Quarzreaktionsrohr wurde durch einen elektrisch beheizten Ofen beheizt. Anschließend wurde der S-Gehalt auf dem Sorptionsmittel per Elementaranalyse bestimmt. Das Ergebnis ist in Tabelle 1 wiedergegeben.

### Beispiel 7:

0,5 g des in Beispiel 1 präparierten Sorptionsmittels wurden in einer Festbettschüttung in einem Quarzreaktionsrohr (Innendurchmesser 8 mm) vorgelegt und bei einer Temperatur von 420 °C mit einem Gasgemisch aus 2 L/h Chlorwasserstoff, 1 L/h Sauerstoff, 2 L/h Stickstoff und 5 ppm SO₂ für 336 h durchströmt. Das Quarzreaktionsrohr wurde durch einen elektrisch beheizten Ofen beheizt. Anschließend wurde der S-Gehalt auf dem Sorptionsmittel per Elementaranalyse bestimmt. Das Ergebnis ist in Tabelle 1 wiedergegeben.

### Beispiel 8:

Eingesetzt wurde ein handelsüblicher mit CeO₂ dotiertes ZrO₂-Trägermaterial (Hersteller: Saint-Gobain NorPro, Typ: SZ 61191, Kugeln mit 3 mm Durchmesser) in tetragonaler Struktur mit folgenden Spezifikationen:
- 18% CeO₂, Rest ZrO₂
- Spezifische Oberfläche von 110 m²/g (Stickstoffadsorption, Auswertung gemäß BET)
- Bimodale Porenradienverteilung, wobei eine Porenklasse 1 (Transportporen) einen Median von 150 nm und eine Porenklasse 2 (Feinporen) einen Median von 4 nm aufweist (Quecksilberporosimetrie)
- Porenvolumen von 0,25 cm³/g (Quecksilberporosimetrie)
- Schüttdichte von 1400 kg/m³ (gemessen in einem Standzylinder mit DN100 und 350 mm Höhe)

Der ZrO₂-Katalysatorträger wurde entsprechend des Sorptionsmittels in den Beispielen 2 - 7 getestet und analysiert. Das Ergebnis ist in Tabelle 1 wiedergegeben.

### Beispiel 9:

Eingesetzt wurde ein handelsübliches ZrO₂-Trägermaterial (Hersteller: Saint-Gobain NorPro, Typ: SZ 31152, Kugeln mit 3 mm Durchmesser) in tetragonaler Struktur mit folgenden Spezifikationen:
- Spezifische Oberfläche von 140 m²/g (Stickstoffadsorption, Auswertung gemäß BET)
- Bimodale Porenradienverteilung, wobei eine Porenklasse 1 (Transportporen) einen Median von 150 nm und eine Porenklasse 2 (Feinporen) einen Median von 3 nm aufweist (Quecksilberporosimetrie)
- Porenvolumen von 0,30 cm³/g (Quecksilberporosimetrie)
- Schüttdichte von 1100 kg/m³ (gemessen in einem Standzylinder mit DN100 und 350 mm Höhe)

Der ZrO₂-Katalysatorträger wurde entsprechend des Sorptionsmittels in den Beispielen 2 - 7 getestet und analysiert. Das Ergebnis ist in Tabelle 1 wiedergegeben.

### Beispiel 10:

Eingesetzt wurde ein ZrO₂-Mikropartikel-Trägermaterial (Hersteller: Saint-Gobain NorPro, Mikropartikel mit 0.781 mm Durchmesser) in monokliner Struktur mit folgenden Spezifikationen:
- Spezifische Oberfläche von 102 m²/g (Stickstoffadsorption, Auswertung gemäß BET)
- Bimodale Porenradienverteilung, wobei eine Porenklasse 1 (Transportporen) einen Median von 110 nm und eine Porenklasse 2 (Feinporen) einen Median von 8 nm aufweist (Quecksilberporosimetrie)
- Porenvolumen von 0,65 cm³/g (Quecksilberporosimetrie)
- Schüttdichte 722 kg/m³ (gemessen in einem Standzylinder mit DN100 und 250 mm Höhe)
- Der ZrO₂-Katalysatorträger wurde entsprechend des Sorptionsmittels in den Beispielen 2 - 7 getestet und analysiert.

Die wesentlichen Kennzahlen und Ergebnisse aus den oben aufgeführten Beispielen sind in der untenstehenden Tabelle 1 zusammengefasst.

**Tab. 1**

| Bsp. | Material | BET | Schwefel [ppm] | | | | | | |
|---|---|---|---|---|---|---|---|---|---|
| # | | [m²/g] | U nvergiftet | RT | 260 °C | 300 °C | 340 °C | 380 °C | 420 °C |
| 2-7 | CeO₂/ZrO₂ | - | 26 | 230 | 470 | 400 | 4400 | 5500 | 8900 |
| 8 | CeO₂/ZrO₂ | 110 | 88 | 470 | 420 | 700 | 89? | 3900 | 6300 |
| 9 | ZrO₂ | 140 | 120 | 260 | 88 | 1000 | 2500 | 200 | 14 |
| 10 | ZrO₂ | 102 | 22 | 140 | 19 | 200 | 940 | 600 | 5 |

### Beispiel 11/12:

### Eingesetzt wurden handelsübliche ZrO2-Trägermaterialen (Hersteller: Saint-Gobain NorPro) in tetragonaler Struktur mit folgenden Spezifikationen:

### Typ: SZ 61152, Kugeln mit 3 mm Durchmesser (Beispiel 11):

- Spezifische Oberfläche von 133 m²/g
- Median Porendurchmesser: 775 Å
- Gesamtporenvolumen von 0,30 cm³/g
- Schüttdichte von 1240 kg/m³ Typ: SZ 31163, Kugeln mit 3 mm Durchmesser (Beispiel 12):
- Spezifische Oberfläche von 57,2 m²/g
- Median Porendurchmesser: 171 Å
- Gesamtporenvolumen von 0,29 cm³/g
- Schüttdichte von 1281,3 kg/m³

Jeweils 1 g des Sorptionsmittels wurden in einer Festbettschüttung in einem Quarzreaktionsrohr (Innendurchmesser 8 mm) vorgelegt und bei einer Temperatur von 20 °C mit einem Gasgemisch aus 2 L/h Chlorwasserstoff, 2,75 L/h Stickstoff und 100 ppm SO2, H₂S oder COS für 168 h durchströmt. Anschließend wurde der Schwefel-Gehalt auf dem Sorptionsmittel per Elementaranalyse bestimmt. Das Ergebnis ist in Tabelle 2 wiedergegeben.

**Tab. 2**

| Beispiel | BET [m²g⁻¹] | Schwefel [ppm] | | | |
|---|---|---|---|---|---|
| | | *Unvergiftet* | *Nach SO₂ Adsorption* | *Nach H₂S Adsorption* | *Nach COS Adsorption* |
| 11 | 133 | 99 | 180 | 120 | 100 |
| 12 | 57,2 | 24 | 31 | 28 | 52 |

### Schlussfolgerungen:

Die Sorptionseigenschaften der Materialien ändern sich stark bei unterschiedlichen Temperaturen.

Bei den reinen ZrO₂-Materialien liegt das Sorbtionsvermögen nahezu immer unter dem Sorbtionsvermögen der CeO₂-enthaltenden Materialien. Dabei zeichnet sich bei den reinen ZrO₂-Materialien bzgl. des Sorbtionsvermögens ein linearer Trend zur BET-Oberfläche ab. Je größer die BET-Oberfläche ist, desto höher ist auch meistens das Sorbtionsvermögen. Zusätzlich steigt das Sorbtionsvermögen der reinen ZrO₂-Materialien linear mit der Temperatur von 260 °C bis 340 °C an, danach fällt das Sorptionsvermögen der reinen ZrO₂-Materialien wieder ab. Bei der höchsten gemessenen Temperatur (420°C) ist das Sorptionsvermögen verschwindend gering und die Schwefelkonzentration liegt sogar unterhalb der Konzentration der Ausgangsmaterialien.

Es konnte zudem gezeigt werden, dass je nach verwendetem ZrO₂-Material und Schwefelspezies eine unterschiedliche Performance (Adsorbierte Menge Schwefel (ppm)) erhalten wird. Es kann somit geschlussfolgert werden, dass ZrO₂-Materialien zwar generell für die Adsorption von Schwefelspezies geeignet sind, jedoch das Material in Abhängigkeit der Schwefelverunreinigung ausgewählt werden muss.

Bei den CeO₂/ZrO₂-Materialien lässt sich derselbe Trend bei steigender Temperatur erkennen, wie bei den reinen ZrO₂-Materialien. Jedoch ist das Sorptionsvermögen bei den CeO₂/ZrO₂-Materialien viel höher als bei den reinen ZrO₂-Materialien. Zudem nimmt das Sorptionsvermögen der CeO₂/ZrO₂-Materialien bis zu der Temperatur von 420 °C kontinuierlich zu, anders als bei den reinen ZrO₂-Materialien.

## Patentansprüche

1. Verfahren zur Reinigung von Schwefelverbindungen enthaltenden korrosiven Prozessgasen, **dadurch gekennzeichnet, dass** ein Gasstrom, welcher korrosive Gase beinhaltet, in einer Sorptionsphase über ein anorganisches Sorptionsmaterial geleitet wird, welches mindestens eine der sorbierbaren schwefelhaltigen Komponenten auf dem Sorptionsmaterial aufnimmt, und den von Schwefelverbindungen abgereicherten Gasstrom abführt.

2. Verfahren nach Anspruch 1, **dadurch gekennzeichnet, dass** die Schwefelverbindungen eine oder mehrere Verbindungen aus der Reihe: SOₓ, bevorzugt SO₂ und SO₃, H₂S, CS₂, SOCl₂, S2Cl₂, SCl₂, COS und Merkaptane umfassen.

3. Verfahren nach einem der Ansprüche 1 oder 2, **dadurch gekennzeichnet, dass** die Schwefelverbindungen als Spurengas vorliegen, insbesondere in einer Konzentration von maximal 10 ppm, bevorzugt maximal 1 ppm, besonders bevorzugt maximal 0,1 ppm.

4. Verfahren nach einem der Ansprüche 1 bis 3, **dadurch gekennzeichnet, dass** das Sorptionsmaterial als aktive Komponente mindestens ein Oxid oder Mischoxid von Cer und/oder Zirkonium und/oder Titan umfasst, bevorzugt CeO₂ und/oder ZrO₂ und/oder TiO₂.

5. Verfahren nach einem der Ansprüche 1 bis 4, **dadurch gekennzeichnet, dass** das Sorptionsmaterial auf einem chemisch gegenüber Chlorwasserstoff beständigen Trägermaterial, insbesondere einem oder mehreren Trägermaterialien aus der Reihe: Al₂O₃, TiO₂, ZnO₂, SiO₂, SnO₂ und ZrO₂ geträgert ist, wobei das Trägermaterial und die eventuelle aktive Komponente des Sorptionsmaterials unterschiedlich sind.

6. Verfahren nach einem der Ansprüche 1 bis 5, **dadurch gekennzeichnet, dass** das korrosive Prozessgas als korrosive Komponente mindestens Chlorwasserstoff oder Chlorwasserstoff und Chlor umfasst.

7. Verfahren nach Anspruch 6, **dadurch gekennzeichnet, dass** der von Schwefelverbindungen abgereicherte Gasstrom einem nachgeschalteten katalytischen Prozess, bevorzugt einer katalytischen Oxidationsreaktion, besonders bevorzugt einer thermokatalytischen Oxidation von Chlorwasserstoffgas zugeführt wird.

8. Verfahren nach einem der Ansprüche 6 bis 7, **dadurch gekennzeichnet, dass** die Gasreinigung des korrosiven Prozessgases in einer Reaktionszone durchgeführt wird, die in einem Reaktor angeordnet ist, der von einem nachgeschalteten weiteren Reaktor getrennt ist und deren Temperatur und/oder Druck unabhängig vom weiteren Reaktor gesteuert werden kann.

9. Verfahren nach einem der Ansprüche 6 bis 7, **dadurch gekennzeichnet, dass** die Gasreinigung des korrosiven Prozessgases in einer Reaktionszone durchgeführt wird, die in einem Reaktor mit mehreren Reaktionszonen angeordnet ist, wobei die Reaktionszone zur Reinigung von mindestens einer weiteren nachgeschalteten Reaktionszone für die Gasphasenreaktion getrennt ist und die Temperatur und/oder der Druck in der Reaktionszone zur Gasreinigung von der nachgeschalteten Reaktionszone unabhängig gesteuert werden kann.

10. Verfahren nach einem der Ansprüche 1 bis 9, **dadurch gekennzeichnet, dass** das Sorptionsmittel einen geträgerten Cer-Oxid Katalysator umfasst, der insbesondere dadurch erhalten ist, dass eine Cerverbindung insbesondere eine Verbindung aus der Reihe: Cernitrat, Ceracetat oder Cerchlorid in Lösung mittels trockener Imprägnierung auf den Träger aufgebracht und der imprägnierte Träger anschließend getrocknet und bei erhöhter Temperatur kalziniert ist.

11. Verfahren nach einem der Ansprüche 1 bis 10, **dadurch gekennzeichnet, dass** die Reinigung des korrosiven Prozessgases bei einer Temperatur von maximal 420°C, bevorzugt maximal 200°C, besonders bevorzugt maximal 40 °C erfolgt..

12. Verfahren nach einem der Ansprüche 1 bis 11, **dadurch gekennzeichnet, dass** die Reinigung des korrosiven Prozessgases bei einem Druck von mindestens 1013 hPa, bevorzugt mindestens 2026 hPa bis 25.325 hPa erfolgt.

13. Verfahren nach einem der Ansprüche 1 bis 12, **dadurch gekennzeichnet, dass** der von Schwefelverbindungen abgereicherte Gasstrom einen Restgehalt an Schwefelverbindungen von maximal 0,05 ppm, bevorzugt maximal 0,01 ppm, besonders bevorzugt maximal 1 ppb aufweist.

14. Verwendung eines Sorptionsmaterials, das als aktive Komponente mindestens ein Oxid oder Mischoxid von Cer und/oder Zirkonium umfasst, bevorzugt CeO₂ und/oder ZrO₂ zur Entfernung von Schwefelverbindungen aus Schwefelverbindungen enthaltendem korrosiven Prozessgas, insbesondere von Chlorwasserstoff oder Chlorwasserstoff und Chlor enthaltendem korrosiven Prozessgas.
